# EUROPEAN PATENT APPLICATION

(11) **EP 2 315 466 A1**
(43) Date of publication of application: **27.04.2011**
(21) Application number: 09806592.3
(22) Date of filing: 06.03.2009
(51) Int. Cl.: H04W 16/02, H04W 72/10, H04W 92/20

(54) **WIRELESS COMMUNICATION SYSTEM, WIRELESS COMMUNICATION DEVICE, AND WIRELESS RESOURCE MANAGEMENT METHOD**

(30) Priority: 12.08.2008 WO PCT/JP2008/064674
(71) Applicant: Hitachi, Ltd., Chiyoda-ku Tokyo 100-8280 (JP)
(72) Inventor: TAKADA, May, Tokyo 100-8220 (JP); FUJISHIMA, Kenzaburo, Tokyo 100-8220 (JP); UWANO, Koki, Tokyo 100-8220 (JP)
(74) Representative: MERH-IP Matias Erny Reichl Hoffmann
(86) International application number: PCT/JP2009/054819
(87) International publication number: WO 2010/018696

(57) **Abstract**

It is provided a base station for providing a wireless communication area, which is coupled to a core network via a gateway, including: an interface for receiving settings of availability of allocation to terminals located in a border area of the wireless communication area and availability of allocation to terminals located in an area other than the border area for each of radio resource blocks which are defined by dividing radio resources available for use in the wireless communication area provided by the base station into predetermined units; and a plurality of profiles for defining scheduling limitations on the radio resources in the number of the profiles of patterns, being set via the interface, in which the base station applies scheduling limitations defined by the profile designated with the identifier and allocates the radio resources upon designation of one of the plurality of profiles with an identifier.

## Description

### BACKGROUND OF THE INVENTION

This invention relates to a wireless communication system and, in particular, relates to a radio resource management technique in the wireless communication system.

Recent wireless cellular communication systems such as the mobile phone are requested to transmit wide variety of information from that of a relatively small number of bits such as voice and emails in characters to that of a significant number of bits such as emails with pictures attached and motion picture data for the TV phone. To respond to this request, current wireless cellular communication systems employ multiple packet sizes and multiple modulation schemes to be adapted to the amount (the number of bits) of transmitted data. A system includes a terminal whose radio propagation conditions are excellent as it is located near a base station or unobstructed and a terminal whose radio propagation conditions are poor as it is located behind a building where a signal from a base station is blocked or at a place where it receives strong interference power from another cell.

For this reason, a system divides radio resources into small blocks in time, frequency, and space, sequentially determines radio resources to be allocated to each terminal in accordance with its radio propagation conditions, and selects and combines a packet size and a modulation scheme to be used in each radio resource block. These operations improve the frequency use efficiency in the whole system. Functions such as allocating radio resources, reallocating the resources, and deallocating the resources are generally called RRM (Radio Resource Management) functions.

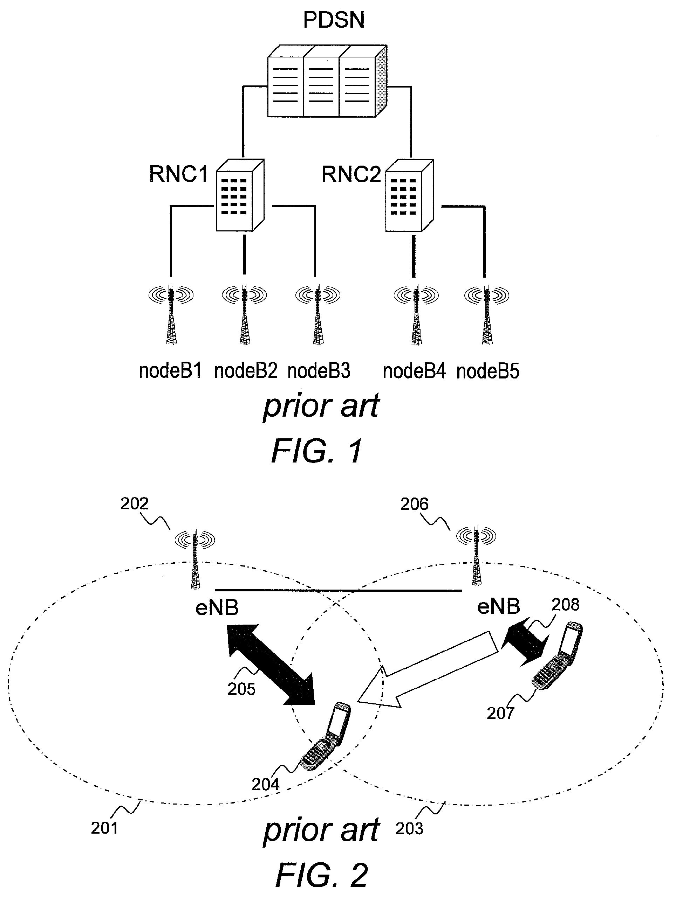

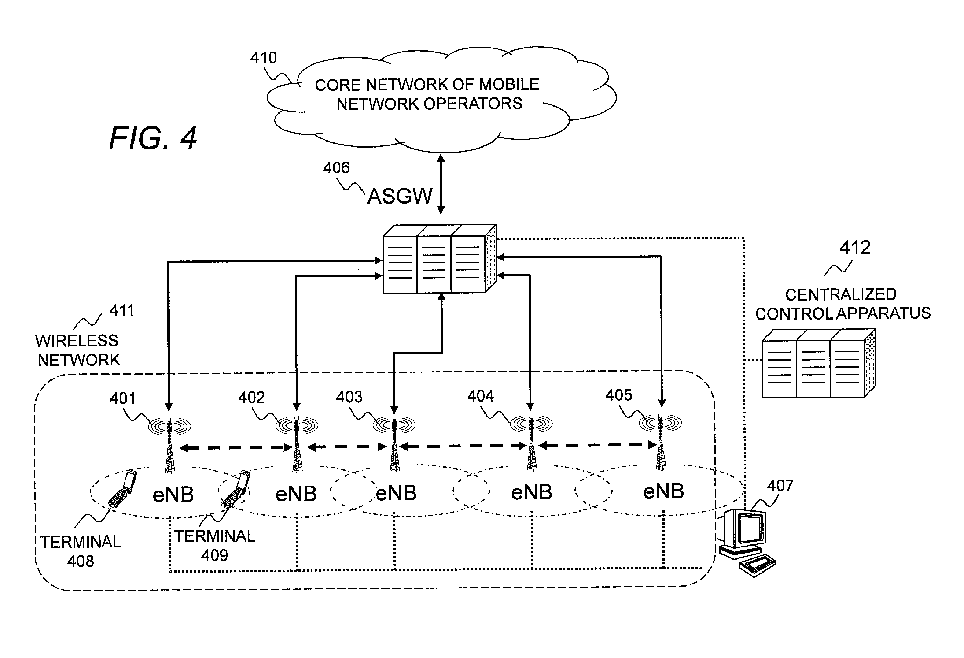

Wireless communication networks standardized by the 3GPP (3rd Generation Partnership Project), in the 3rd to the 3.5th generations, used to have three-layer structures as shown in FIG. 1. To shift to the 3.9th generation, however, a node B (radio base station) and an RNC (Radio Network Controller), which had been independent from each other, were unified into an enhanced node B (hereinafter, abbreviated to eNB), so that the system architecture has drastically changed into a two-layer structure as shown in FIG. 4.

With this change in the architecture, most of the RRM functions having been implemented in RNCs have been transferred to eNBs (refer to Chapter 11, 3GPP TR 25.912 V7.2.0 (2007-06)). For example, functions such as radio bearer control, radio admission control, connection mobility control are implemented in eNBs. To implement ICIC (Inter-Cell Interference Coordination) which requires coordination among cells (eNBs), however, there still exist some issues to be discussed.

Now referring to FIG. 2, inter-cell interference and the ICIC will be explained. In a system employing OFDMA (Orthogonal Frequency Division Multiple Access) and having a frequency reuse factor of 1, a cell and another cell adjacent thereto use the same frequency band. In the example of FIG. 2, radio resources 205 used for communication between an eNB 202 of a cell 201 and a terminal A (204) located in the cell-edge area between the cell 201 and an adjacent cell 203 and radio resources 208 used for communication between an eNB 206 of the cell 203 adjacent to the cell 201 and a terminal B (207) located in the cell-center area of the cell 203 might be overlapped in time and/or frequency. In such an event, the terminal A (204) receives a radio signal transmitted from the eNB 206 to the terminal B (207) because the terminal A (204) is located in the cell-edge area between the cell 201 and the cell 203. Such a radio signal transmitted to a different terminal becomes a noise (interference) to the radio signal 205 which is originally intended to be received. To prevent such a phenomenon, eNBs or the whole system coordinates to manage the allocation of radio resources. This is called ICIC.

In a first operative example of the ICIC, eNBs may exchange and coordinate information such as information on load (congestion) in their own cells and information on radio resources allocated to terminals in their own cell-edge area. Then the ICIC modifies scheduling limitations for a scheduler, for example, to limit transmission power in a specific resource block to a certain level or below or to prohibit allocation of a specific resource block (refer to 7.1.2.6, 3GPP TR 25.814 V7.1.0 (2006-09)).

In reconfiguring (enabling, disabling, and modifying) the limitations, two cycles have been proposed: several days (wherein eNBs exchange information on the specifications of the limitations only) and several minutes (wherein eNBs exchange detailed information necessary for determining a change of limitations every tens of seconds to one minute).

A scheduler in each eNB controls scheduling of radio resources to terminals except for the foregoing scheduling limitations. Each eNB determines resource allocation to each of a plurality of terminals communicating in its own cell while considering conditions such as the presence of data to be transmitted to the terminal, the time passed after the last resource allocation to the terminal, the channel quality for the terminal, and the satisfaction level of the terminal to the QoS (Quality of Service) requirement, in the scheduling interval.

The aims of the scheduling are different depending on the policy of the eNB; basically, it is preferable that all radio resources be evenly used to improve the efficiency. On the contrary, the more scheduling limitations by the ICIC, the higher the probability that resources intended to be allocated (in good conditions) will not available, so that the throughput goes down.

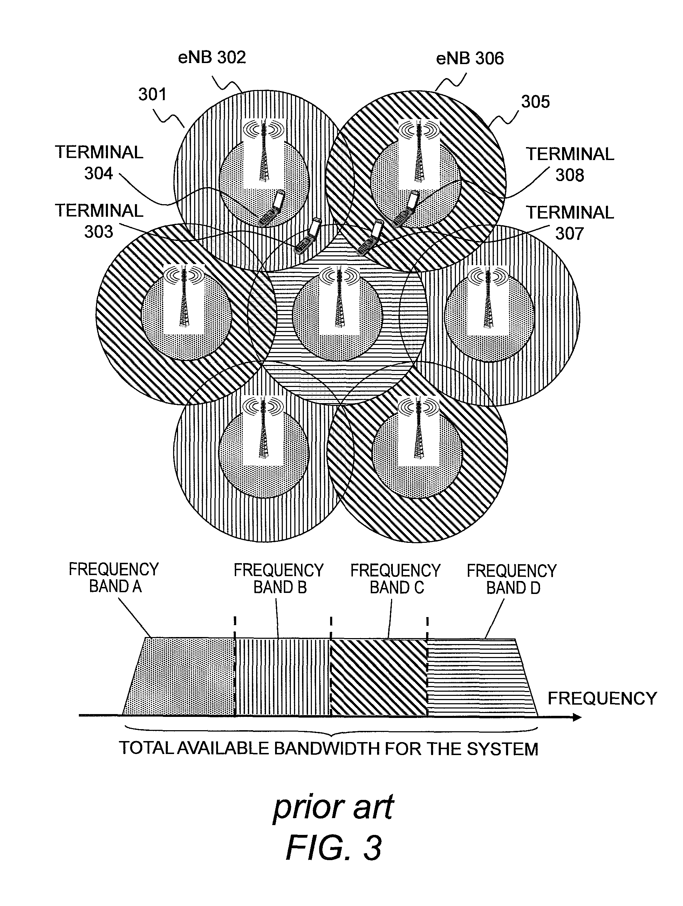

As a second operative example of the ICIC, FFR (Fractional Frequency Reuse) proposed for the 3.5th generation is known, which is a method of allocating radio resources under the coordination of the whole system (refer to PCT pamphlet No. WO2006/020032 and "A Study on the Fractional Frequency Reuse for the OFDMA-based Cellular Systems", by Satoshi KONISHI, p.381, B-5-59, Proceedings of the 2007 IEICE Communications Society Conference, Sep. 11, 2007). With reference to FIG. 3, the principle of the FFR will be explained. With respect to an eNB 302 of a cell 301, an RNC in a foregoing conventional network system distinguishes a terminal 303 in its cell-edge area from a terminal 304 elsewhere (namely, located close to the eNB 302) and provides limitations on resource scheduling so as to allocate a band B to the terminal 303 in the cell-edge area and a different band A to the terminal 304 elsewhere (in its cell-center area). With respect to an eNB 306 of an adjacent cell 305, the RNC provides limitations on resource scheduling so as to allocate a different band C to a terminal 307 in its cell-edge area and the foregoing band A to a terminal 308 elsewhere (in its cell-center area).

In this way, the ICIC places scheduling limitations so as to allocate the same band A to the terminals in cell-center areas for all the eNBs and distribute the remaining bands to the terminals in cell-edge areas so that the allocated bands will not overlap with one another among the cells. Consequently, increase in the number of required frequency bands (subdividing the radio resources in the direction of frequency) can be suppressed.

To implement FFR to seven cells as shown in FIG. 3, radio resources for the eNBs need to be divided into four in the direction of frequency. To allocate different bands to terminals in cell-edge areas and terminals in cell-center areas without FFR, the radio resources need to be divided into fourteen in the direction of frequency. In the meanwhile, if FFR is not implemented and terminals in cell-edge areas are not treated favorably, the radio resources do not need to be divided in the direction of frequency and all frequencies may be freely allocated. Compared with this case, the ICIC, even FFR, reduces the number of radio resources available for scheduling, so that the throughput tends to degrade.

### SUMMARY OF THE INVENTION

As described above, the efficiency in scheduling in a cell for each eNB and scheduling limitations by the ICIC are controls that conflict with each other in nature. Unless the resource scheduling is limited timely to meet the conditions of load in the cell and to achieve the required effects of the ICIC, the throughput would rather degrade.

For scheduling limitations appropriate for the situation, it is preferable to collect more system information over a wider area so as to assess the situation more accurately. Optimization in a whole system brings about effects of ICIC with less scheduling limitations. In the meanwhile, if it takes much time to assess the situation, management cannot keep up with changes in the situation. Accordingly, the time to collect the information and the cycle of control should be shorter. Collecting and controlling more system information in a shorter cycle cause a problem that the communication traffic between eNBs or in the system increases to put strain on the capacity of the backbone network.

Accordingly, an object of this invention is to provide a method of resource allocation with less strain on the capacity of the backbone network while placing appropriate limitations on resource scheduling to meet traffic distributions at different times and the effects obtained by ICIC with wide variety of system information collected so that the ICIC will not adversely affect the scheduling in a cell.

A representative aspect of this invention is as follows. That is, there is provided a base station for providing a wireless communication area, which is coupled to a core network via a gateway, including: an interface for receiving settings of availability of allocation to terminals located in a border area of the wireless communication area and availability of allocation to terminals located in an area other than the border area of the wireless communication area for each of radio resource blocks which are defined by dividing radio resources available for use in the wireless communication area provided by the base station into predetermined units; and a plurality of profiles for defining scheduling limitations on the radio resources in the number of the profiles of patterns, being set via the interface. The base station applies scheduling limitations defined by the profile designated with the identifier and allocates the radio resources upon designation of one of the plurality of profiles with an identifier.

According to an embodiment of this invention, ICIC control (radio resource scheduling limitations) optimized with information collected over a system is provided to each eNB by a system apparatus at a higher level than eNBs (a maintenance apparatus, an ASGW, a centralized control apparatus, or a specific eNB). Furthermore, the specifications of the scheduling limitations can be changed quickly and in conjunction with system operations to achieve ICIC that efficiently follows changes in traffic distribution in the system without increasing the amount of traffic between eNBs or in the system and is highly efficient.

### BRIEF DESCRIPTION OF THE DRAWINGS

The present invention can be appreciated by the description which follows in conjunction with the following figures, wherein:
FIG. 1 is a block diagram illustrating a configuration of the 3rd to 3.5 generation wireless communication network system;
FIG. 2 is a block diagram illustrating the principle of generation of inter-cell interference;
FIG. 3 is a block diagram illustrating the principle of FFR and the second operative example of ICIC;
FIG. 4 is a block diagram illustrating a configuration of a wireless communication network system in the embodiment of this invention;
FIG. 5 is a diagram illustrating a structure of a radio resource block in the embodiment of this invention;
FIG. 6 is a diagram illustrating a first example of scheduling limitations provided by a maintenance apparatus to an eNB in the embodiment of this invention;
FIG. 7 is a diagram illustrating a second example of scheduling limitations provided by a maintenance apparatus to an eNB in the embodiment of this invention;
FIG. 8 is a table illustrating four types of resource scheduling limitations separated depending on the amount of traffic in a cell where an eNB is placed and the mobility of terminals in the embodiment of this invention;
FIG. 9 is a diagram illustrating the characteristic differences among the fixed-point changing of RRM profiles, the combination of fixed-point changing of RRM profiles and adaptive control based on coordination among eNBs, and only the adaptive control in the embodiment of this invention;
FIG. 10 is a flowchart of a procedure of setting a plurality patterns of scheduling limitations to an eNB by a maintenance apparatus in the embodiment of this invention;
FIG. 11 is a flowchart of a procedure of changing RRM profiles in the embodiment of this invention;
FIG. 12 is a flowchart of a procedure of updating an RRM profile in the embodiment of this invention; and
FIG. 13 is an explanatory diagram exemplifying member variables and parameters in the embodiment of this invention.

### DETAILED DESCRIPTION OF THE EMBODIMENTS

First, the outline of this invention will be explained. This invention has the following three representative aspects:
(1) Each eNB in the system includes an interface for receiving instructions on permission of allocation of radio resources, which is determined using a three-dimensional (3D) structured array, to terminals in a cell-edge area and to terminals elsewhere (in a cell-center area). Here, if the separation between the terminals in a cell-edge area and the terminals in a cell-center area is extremely different depending on the eNB, expected effect may not be achieved even if limitations were placed on resource scheduling. To avoid such a problem, each eNB includes another interface for receiving settings of limitations on the manner and the threshold of separation between the terminals in a cell-edge area and the terminals in a cell-center area, which are determined in one-to-one correspondence with the 3D structured array. The 3D structured array and the corresponding settings on the manner and the threshold of separation are combined and defined as an RRM profile.

The RRM profile may include information indicating that the threshold has not been specified, instead of the threshold.
(2) Through the foregoing interfaces, a system apparatus at a higher level than eNBs (such as a maintenance apparatus, an access gateway (ASGW), a centralized control apparatus, or a specific eNB) installs a plurality of RRM profiles in each eNB in the system to allow for selection of settings of scheduling limitations.
(3) The above-described fixed-point changing of RRM profiles is used together with adaptive control based on coordination among eNBs like the first operative example of ICIC to achieve ICIC that quickly follows changes in the traffic distribution in the system and is efficient.

Hereinafter, an embodiment of this invention will be described with reference to FIGS. 4 to 9.

FIG. 4 is a block diagram illustrating a configuration of a wireless communication network system in this embodiment.

The wireless communication network system of this embodiment includes a plurality of enhanced node Bs (eNBs) 401 to 405, an access gateway (ASGW) 406, a maintenance apparatus 407, and a centralized control apparatus 412. Terminals 408 and 409 are connected to each of the eNBs 401 to 405.

Each of the eNBs 401 to 405 has functions of a radio base station and functions of a wireless network control apparatus (for example, a part of the functions of an RNC) and configures a wireless interface with terminals in its own cell (wireless communication area) to provide wireless communication functions for wirelessly transmitting and receiving information to and from the terminals. The eNBs 401 to 405 perform scheduling of radio resources within their own cell, retransmission control, and determination of handover to a different cell.

The ASGW 406 links a core network of mobile network operators 410 with a wireless network 411. The ASGW 406 terminates packets and calls up a terminal by paging. The maintenance apparatus 407 monitors the wireless communication network for failures, controls the wireless communication network, and collects statistics information. Besides the maintenance apparatus 407, a centralized control apparatus 412 may be provided to optimize the whole system. The centralized control apparatus 412 is optional.

The eNBs 401 to 405 are connected with the ASGW 406 to transmit user data. The eNBs 401 to 405 are also connected with other nearby eNBs to exchange control information for handover and ICIC. The eNBs 401 to 405 are also connected with the maintenance apparatus 407. They receive settings of system parameters from the maintenance apparatus 407 and report statistics information to the maintenance apparatus 407. The ASGW 406 is also connected with the maintenance apparatus 407.

This invention particularly relates to the function of scheduling of an eNB and interfaces between the maintenance apparatus and eNBs, between the ASGW and eNBs, between the centralized control apparatus and eNBs, and between eNBs.

In a wireless communication system that employs OFDMA and is capable of multiplexed transmission in spatial directions using multiple transmitting and receiving antennas, radio resources available for communication from an eNB to a plurality of terminals in its own cell are divided three-dimensionally, in the directions of (A) frequency, (B) time, and (C) space, and multiplexed in these three dimensions.

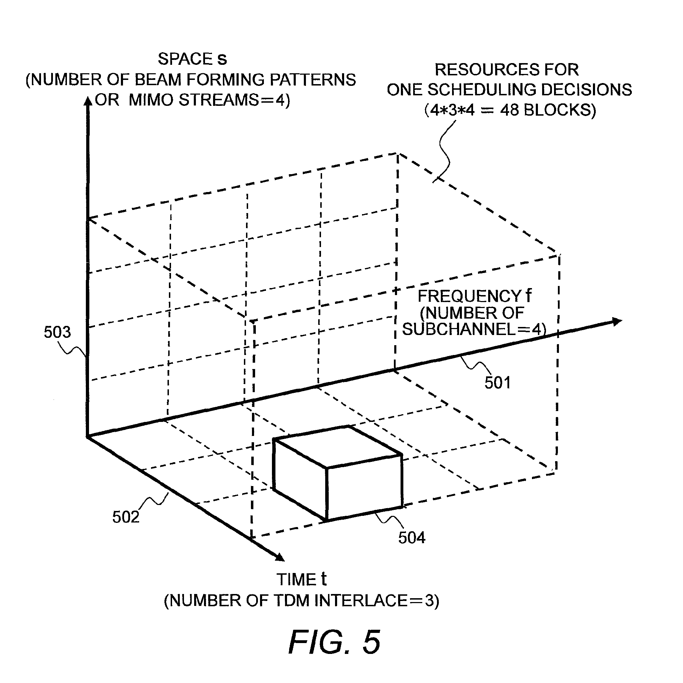

In the example shown in FIG. 5, the radio resources are divided into four sub-channels in the frequency direction 501, three TDM (Time Division Multiplex) interlaces in the time direction 502, and four beam patterns in the spatial direction 503. The scheduling function of an eNB distributes 48 radio resource blocks to the terminals in communication within its own cell in each scheduling period. If adaptive modulation is employed, the scheduling function further considers packet sizes, modulation schemes, and transmission powers used in individual radio resource blocks 504 for the overall balance in resource allocation to determine the allocation of wireless resources.

The first aspect of this invention is setting of scheduling availability of each radio resource to terminals located in a cell-edge area or to terminals elsewhere (located in a cell center area) to each eNB in the system by the maintenance apparatus 407, the ASGW 406, the centralized control apparatus 412, or a specific eNB of the eNBs 401 to 405 using a three-dimensional structured array. In the following descriptions, an example in which the maintenance apparatus 407 sets the availability will be explained, but the ASGW 406, the centralized control apparatus 412, or any one of the eNBs 401 to 405 may do it.

If the ASGW 406 is used, it can advantageously collect much information in a wide area in association with call control of eNBs since the ASGW 406 is connected with a number of eNBs via an existing network. A disadvantage is that the coverage of the ASGW 406 is so wide to cause a delay in collecting information and making determinations.

If any one of the eNBs is used, it can quickly collect information of nearby eNBs for speedy feedback control, although the coverage is narrow in contrast with the ASGW 406.

If the maintenance apparatus 407 is used, it can collect information from a wider area than an eNB and narrower than the ASGW 406 as the maintenance apparatus 407 is connected with the ASGW 406 and eNBs via an existing network.

Moreover, if the centralized control apparatus 412 is optionally added, advanced system optimization, which cannot be achieved by the configuration of an existing maintenance apparatus 407, can be implemented by reinforcement of a high-capacity storage for processing and storing information which the conventional maintenance apparatus 407 had not collected and a CPU for optimized computing that causes great load.

The maintenance apparatus 407 provides each of the eNBs 401 to 405 with scheduling limitations on each radio resource block. The details of the limitations are:
(1) a maximum transmission power in the radio resource block;
(2) scheduling availability of the radio resource block to terminals in the cell-edge area; and
(3) scheduling availability of the radio resource block to terminals elsewhere (in the cell-center area).

To set the limitations, the foregoing 3D structured array R[f][t][s] corresponding to the three dimensions of (A) frequency, (B) time, and (C) space is prepared and the above-listed scheduling limitations (1) to (3) are defined as member variables in each radio resource block.

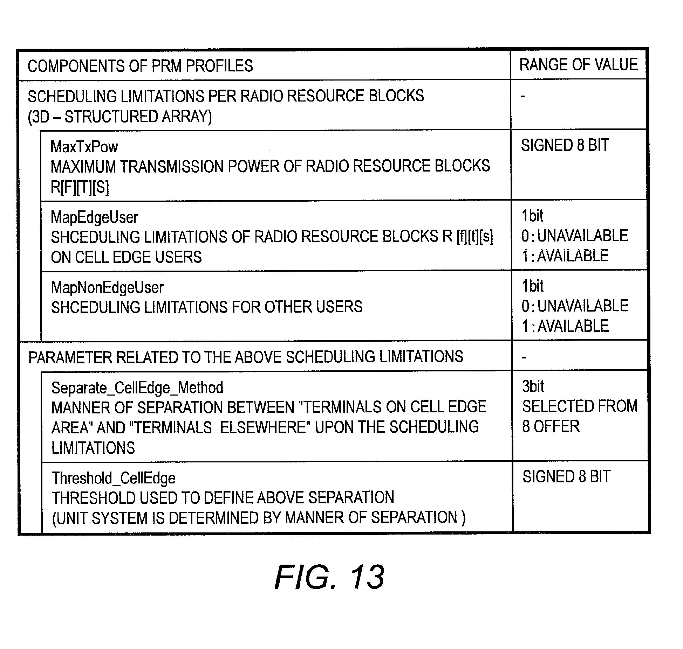

FIG. 13 shows a table of the member variables and examples of parameters. The maintenance apparatus 407 does not need to notify information on all elements in this structured array to the eNBs 401 to 405 and should notify merely information on a part including values changed from defaults (namely, the part with limitations). Moreover, to notify the part with limitations, it does not need to notify the information on each block and should notify the range to be limited and the specifications of the limitations.

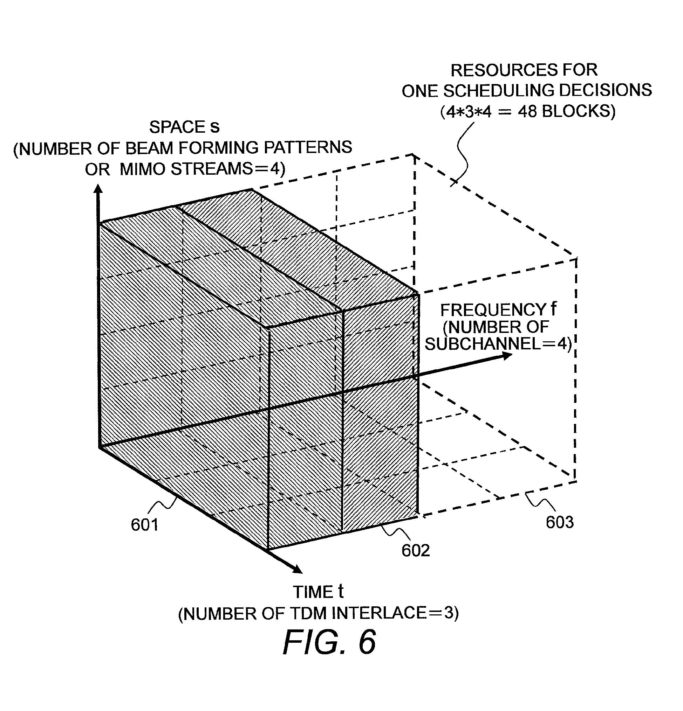

A first example (an RRM profile 1) of scheduling limitations by the maintenance apparatus 407 to an eNB will be described. To implement FFR (add limitations in the direction (A) of frequency) like in the foregoing second example of ICIC, the maintenance apparatus 407 notifies the limitations as follows:
R[f=0][*][*] = {-, 0, 1} : Band A in FIG. 3, 601 in FIG. 6
R[f=1][*][*] = {-, 1, 0} : Band B in FIG. 3, 602 in FIG. 6
R[f<1][*][*] = {-, 0, 0} : Bands C and D in FIG. 3, 603 in FIG. 6

Here, "*" denotes all values of the array element and "-" denotes a default value.

FIG. 6 illustrates separations for resource allocation in accordance with the first example of scheduling limitations.

Resources 601 are allocated to the users in the cell-center area. Resources 602 are allocated to the users in the cell-edge area. Resources 603 are not used (allocated) for the cell.

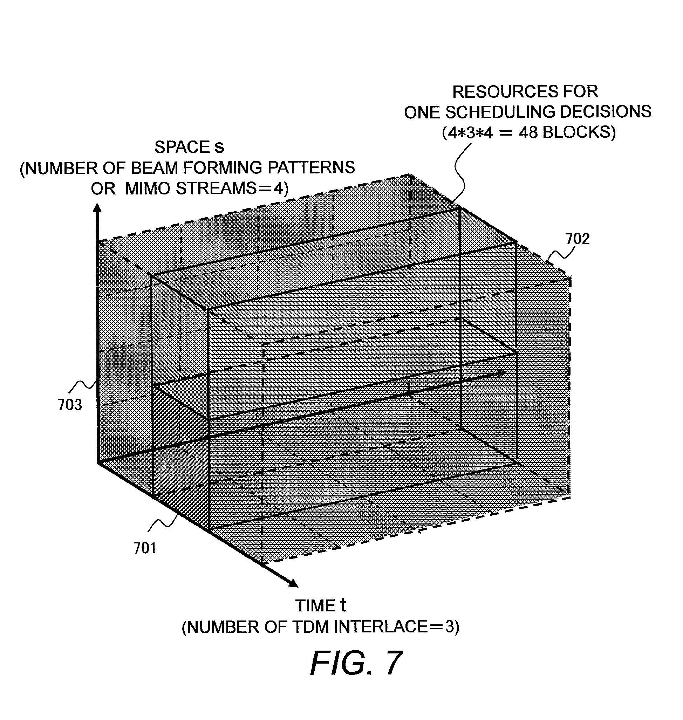

Next, a second example (an RRM profile 2) of scheduling limitations by the maintenance apparatus 407 to an eNB will be described. To perform ICIC that gathers terminals in the cell-edge area to a specific interlace while using different beam patterns that do not overlap among adjacent eNBs, the maintenance apparatus 407 notifies the limitations as follows:
R[*][t=1][s<2] = {-, 1, 0} : 701 in FIG. 7
R[*][t=1][s≥2] = {-, 0, 0} : 702 in FIG. 7
R[*][t≠1][*] = {-, 0, 1} : 703 in FIG. 7

FIG. 7 illustrates separations for resource allocation in accordance with the second example of scheduling limitations.

Resources 701 are allocated to the users in the cell-edge area and divided into two chunks with respect to the spatial axis. Resources 702 are not used (allocated) for the cell. Resources 703 are allocated to the users in the cell-center area.

As understood from these examples, the embodiment allows for limitations in three dimensions, so that ICIC limitations in combination of a plurality of axes will be available.

Moreover, for the maintenance apparatus 407, the ASGW 406, the centralized control apparatus 412, or a specific eNB among the eNBs 401 to 405 to implement the scheduling limitations provided in one-to-one correspondence with the 3D structured array and defined by this array, the manner and the threshold of the separation between terminals in the cell-edge area and terminals in the cell-center area are defined and the maintenance apparatus 407, the ASGW 406, the centralized control apparatus 412, or a specific eNB among the eNBs 401 to 405 sets the manner and the threshold of the separation or only the threshold thereof to each eNB in the system. This is another feature of this embodiment.

In accordance with a first example of the manner of separation, in a cell having a radius of Y meters from a geographical center of a base station, terminals within a radius of not more than X meters (< Y meters) may be identified as "terminals in the cell-center area" and terminals within a radius of X meters to Y meters may be identified as "terminals in the cell-edge area". In practice, it is difficult for the base station to know the exact location of each terminal only through communication with each mobile phone. Some methods are available to know the location, such as determining the location using a GPS receiver additionally built in the terminal or computing the location using trilateration based on the time lags in receiving pilot signals from a plurality of base stations.

In accordance with a second example of the manner of separation, terminals whose received power of a pilot signal, which attenuates in proportion to the distance from the base station, is equal to or higher than a predetermined threshold level (XdBm) may be identified as "terminals in the cell-center area" and terminals whose received power of the pilot signal is lower than the threshold level may be identified as "terminals in the cell-edge area". Although the received power of the pilot signal is generally proportional to the distance between the terminal and the base station, a terminal at a place where it is hard to receive a radio signal, such as the underground or between buildings, might be identified as a wrong group. However, in terms of limitations on radio resource block scheduling, it can be considered reasonable that terminals whose receiving conditions are worse should have higher priority even though they are not located in the cell-edge area. Accordingly, this manner can be considered effective.

In accordance with a third example of the manner of separation, terminals whose ratios between the received power of a pilot signal and the interference power are a predetermined threshold value (XdB) or more are identified as "terminals in the cell-center area" and terminals whose ratios are less than the threshold value are identified as "terminals in the cell-edge area". This manner takes account of effects of interference from the periphery, so it can be considered more effective.

In the meanwhile, the threshold need not be specified with absolute values in the foregoing manners of separation. To change the group depending on the distribution of terminals in the cell, all terminals are ordered in accordance with the given manner of separation and a predetermined threshold percentage (X%) of the terminals may be taken in order from the one closest to the base station to be identified as "terminals in the cell-center area" and the rest of the terminals may be identified as "terminals in the cell-edge area".

In accordance with a fourth example of the manner of separation, each eNB may decide the group of terminals without setting the manner or threshold of the separation. For example, if a frequency band is divided and allocated to cells like in the above-described FFR, separations uneven among eNBs do not affect other cells as far as the transmission power does not exceed the maximum value, so that expected effects can be achieved.

In this way, a system apparatus at a higher level than eNBs (such as the ASGW 406, the maintenance apparatus 407, or the centralized control apparatus 412) is configured to be capable of setting the manner and the threshold of separation of a cell to prevent the separation between "terminals in the cell-edge area" and "terminals in the cell-center area" from excessively differing depending on the eNB, so that intended ICIC effects can be obtained.

The second aspect of this invention is that the maintenance apparatus 407, the ASGW 406, the centralized control apparatus 412, or any one of the eNBs 401 to 405 installs a plurality of foregoing RRM profiles in each eNB in the system to allow for selection of settings of scheduling limitations.

In the following descriptions, an example in which the maintenance apparatus 407 sets scheduling limitations will be explained, but the ASGW 406, the centralized control apparatus 412, or any one of the eNBs 401 to 405 may do it.

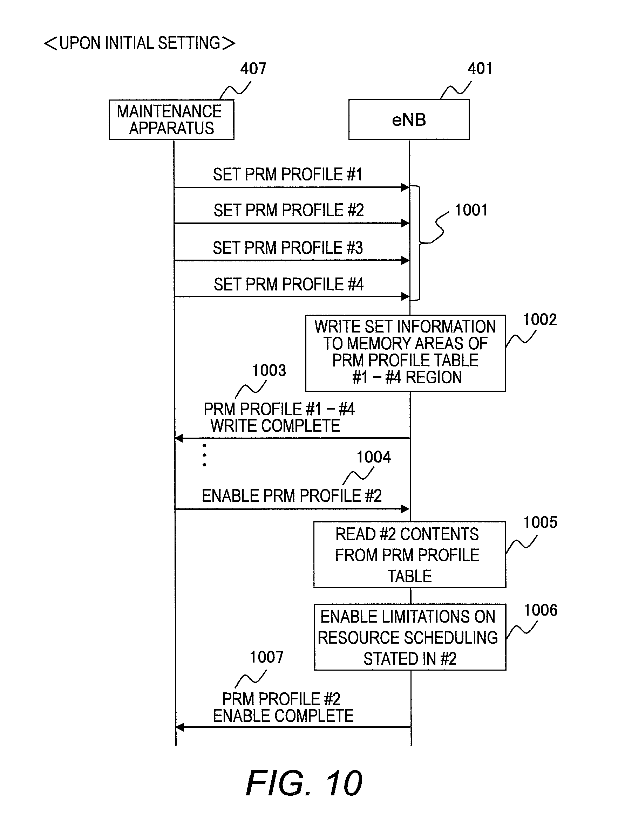

With reference to FIG. 10, a flow of installing a plurality of RRM profiles in the eNB 401 by the maintenance apparatus 407 will be explained.

The maintenance apparatus 407 sends settings on the parts with limitations in the structured array and settings on the manner and the threshold of separation (or only the threshold or information indicating the threshold is not determined) to the eNB 401 as an RRM profile #N (step 1001). The eNB 401 writes the received RRM profile #N to the memory area for #N in its RRM profile table (step 1002). When the RRM profile has been written, the eNB 401 reports the completion of the write of the RRM profile #N to the maintenance apparatus 407 (step 1003). It should be noted that the areas for # 1 to #4 may be handled collectively as shown in the drawing, but each area may be processed separately in sequence of the steps 1001, 1002, and 1003.

When the RRM profiles have been installed, the maintenance apparatus 407 designates an RRM profile to be enabled with its RRM profile number. In the drawing, the profile #2 is designated (step 1004).

The eNB 401 reads the area of the RRM profile table corresponding to the designated number (step 1005) and applies the read RRM profile to the limitations on the radio resource scheduling in its own cell (step 1006).

Then, the eNB 401 reports the enabling of the designated RRM profile #2 to the maintenance apparatus 407 (step 1007).

Although the maintenance apparatus 407 installs RRM profiles in the other eNBs 402 to 405 through the same operations, the contents of the installed RRM profiles may be different depending on the eNB (even if the RRM profiles have the same RRM profile number). Besides, the number designated for enabling may be different depending on the eNB.

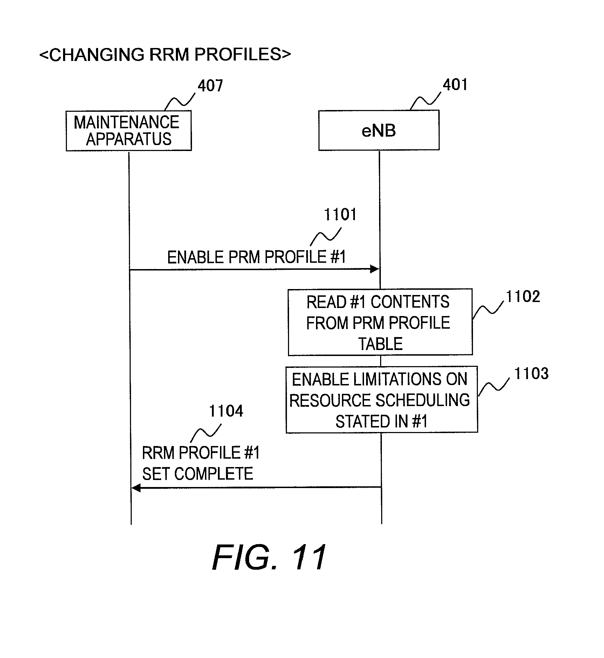

FIG. 11 illustrates a flow of changing RRM profiles. The changing RRM profiles is the same as the steps 1004 to 1007 in the procedure of setting scheduling limitations.

That is to say, to change RRM profiles, the maintenance apparatus 407 designates the RRM profile to be enabled with its RRM profile number. In FIG. 11, #1 is designated (step 1101).

The eNB 401 reads the area # 1 of the RRM profile table corresponding to the designated number (step 1102) and applies the read RRM profile to the limitations on the radio resource scheduling in its own cell (step 1103).

The eNB 401 then reports the enabling of the designated RRM profile #1 to the maintenance apparatus 407 (step 1104).

To change RRM profiles, a method may be used that the maintenance apparatus 407 presets the profile number to be enabled and the time of change through the interface and when the time of change preset by the timer of the eNB 401 has come, it changes the scheduling limitations to those corresponding to the preset profile number, in addition to the method shown in the drawing that the maintenance apparatus 407 designates the profile number to be enabled to the eNB 401 at the time of change.

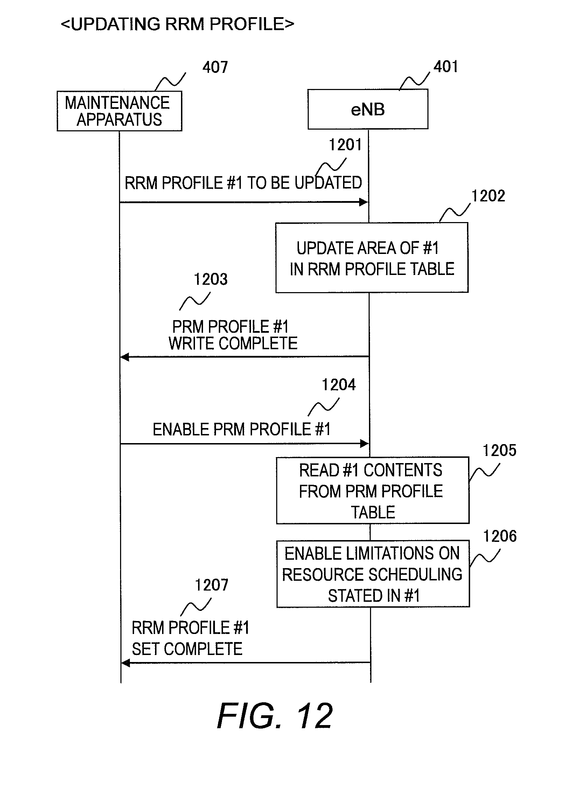

FIG. 12 illustrates a flow of updating the contents of an RRM profile. The process of updating an RRM profile is the same as the step 1001 to 1007 in the procedure of setting scheduling limitations.

That is to say, the maintenance apparatus 407 sends an RRM profile to be updated to the eNB 401. In the drawing, the RRM profile # 1 is sent (step 1201). The eNB 401 writes the received RRM profile # 1 to the area of # 1 in its RRM profile table (step 1202). When the RRM profile has been written, the eNB 401 reports the completion of the write of the RRM profile # 1 to the maintenance apparatus 407 (step 1203).

After the RRM profile has been updated, the maintenance apparatus 407 designates an RRM profile to be enabled with its RRM profile number. In the drawing, the updated profile # 1 is designated (step 1204).

The eNB 401 reads the area of the RRM profile table corresponding to the designated number (step 1205) and applies the read RRM profile to the limitations on the radio resource scheduling in its own cell (step 1206).

The eNB 401 then reports the enabling of the designated RRM profile # 1 to the maintenance apparatus 407 (step 1207).

An specific configuration example of RRM profiles will be described where a first example of scheduling limitations is provided by the maintenance apparatus 407 to the eNB 401 as RRM profile # 1 and a second example of scheduling limitations is provided by the maintenance apparatus 407 to the eNB 402 as RRM profile #2.

In the RRM profile 1, only a half of all the radio resources are used as shown in FIG. 6. Accordingly, the throughput is low, but the effect of the ICIC is highly appreciated, and in addition, diversities in the time direction and the spatial direction can be expected among the resources for terminals in the cell-edge area. In the RRM profile 2, two thirds of all the radio resources are allocated to terminals in the cell-center area as shown in FIG. 7. Accordingly, the throughput is higher than by the RRM profile 1, but if many terminals are located in the cell-edge area, the resources cannot be allocated. Which profile is to be used and when the profile is to be used are determined in view of the environment of the eNB subjected to the setting and the conditions of the cell, and furthermore, the relative conditions of nearby cells as well as the relevant cell. The conditions of the cell vary depending on the time slot, the day of the week, the season, any special event, or the like. This variation is likely to be dominated by factors outside the wireless communication system, such as what kind of service facilities exist in the cell, or how users move depending on the day of the week, the time slot, the weather, or the season. To select an appropriate profile, it is preferable to take account of these factors.

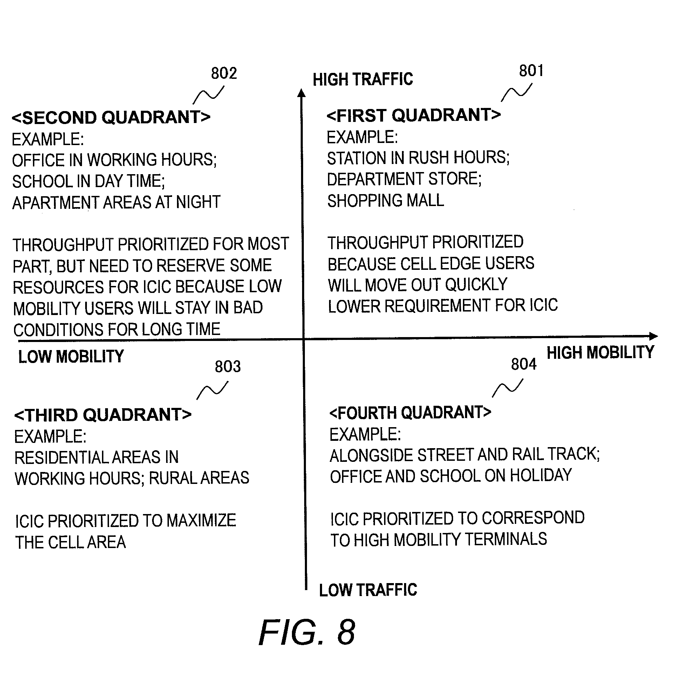

FIG. 8 shows four types of resource scheduling limitations, which are separated in view of the amount of communication (traffic) and the degree of move (mobility) of terminals.

The first quadrant 801 of FIG. 8 represents a place where both of the traffic and the mobility are high, for example, users move quickly and the number of users is great (such as a station in rush hours or a department store). Since terminals in such a place will not stay long in the cell-edge area, the appropriate RRM profile is the type that has higher priority in throughput rather than ICIC.

The second quadrant 802 of FIG. 8 represents a place where the traffic is high but the mobility is low, for example, users are congested but communicate at stationary positions (such as an apartment with many residents in some time period such as night time or weekend, an office in working hours, or a school in daytime). In such a place, the throughput should be prioritized but it is supposed that some terminals will stay long in the cell-edge area. Accordingly, the appropriate RRM profile is the type that generally has priority in the throughput while securing a part of the radio resources for ICIC.

The third quadrant 803 of FIG. 8 represents a place where both of the traffic and the mobility are low, for example, communications in the cell rarely happen (such as a rural area, or a residential area with few users in working hours on a workday). In such a place, the appropriate RRM profile is the type that prioritizes ICIC to cover a wide area. However, it is preferable to keep a wide selectivity of scheduling so that a single terminal can exclusively use more resources.

The fourth quadrant 804 of FIG. 8 represents a place where the traffic is low but the mobility is high, for example, terminals occasionally pass through by movable object (such as a roadside, a rail side, an office in non-working hours, or a school in night time). In such a place, the appropriate RRM profile is the type that prioritizes ICIC. In particular, it is preferable to secure many resources for terminals in the cell-edge area in order to allocate good resources to the terminals with high mobility.

The above-described RRM profile 1 is the type of the fourth quadrant and the RRM profile 2 is the type of the second quadrant. Accordingly, the RRM profile 1 is suitable to be set in an eNB placed in an office, a school, or in an apartment (collective housing). It is appropriate that in a place where many users are present during working time on working days, such as an office or a school, the RRM profile 2 be applied during working time on working days and the RRM profile 1 be applied during night time and on nonworking days. It is appropriate that in a place where many users are present during night time and on nonworking days, such as an apartment area, the RRM profile 1 be applied during working time on working days and the RRM profile 2 be applied during night time and on nonworking days.

The third aspect of this invention is to use the above-described fixed-point changing of RRM profiles together with adaptive control based on the coordination among eNBs like in the first operative example of ICIC.

For example, the maintenance apparatus 407 obtains statistics information including the amount of traffic in the cell and the mobility of terminals periodically (for example, at intervals of one to two hours) from each of the eNBs 401 to 405. The maintenance apparatus 407 may measure the radio propagation conditions in the periphery of the cell with a measurement vehicle. The system administrator statistically processes and analyzes the obtained information in each time slot, each day of the week, each season, and each weather to predict the tendency of the traffic in the cell in every time slot. The system administrator decides a plurality of RRM profiles and the time of changing the RRM profile and sets the determined RRM profiles and the time of changing the RRM profiles to eNBs 401 to 405. The eNBs 401 to 405 superimpose the scheduling limitations by the RRM profiles designated by the maintenance apparatus 407 on the scheduling limitations exchanged among the eNBs 401 to 405 as the time passes, perform scheduling of the resources within the both limitations. Upon receipt of an instruction to change the RRM profile from the maintenance apparatus 407, the eNB does not abruptly change the scheduling limitations for calls with strict QoS limitations (for example, voice calls) of the active calls to allow continuous communication. On the other hand, it allocates the resources for calls newly generated and packet communications based on best effort in accordance with the settings of the new profile.

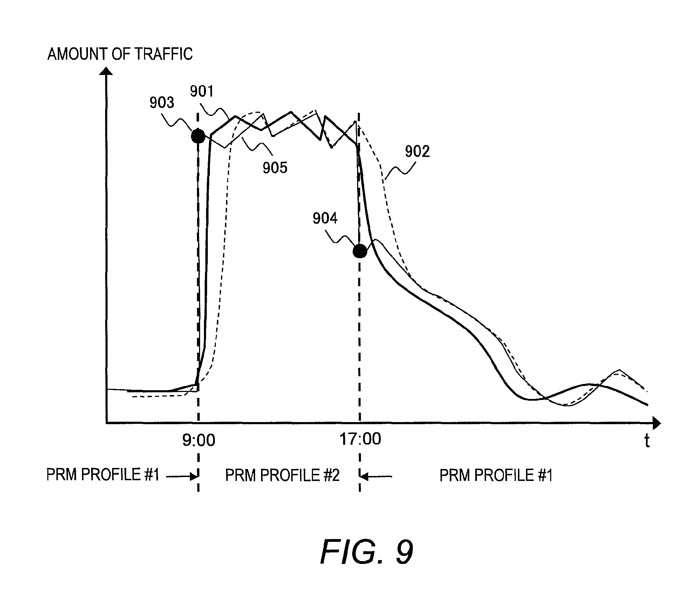

FIG. 9 shows a variation 901 of the amount of traffic during working hours on working days in an eNB placed at a location where many users are present during working hours on working days, such as an office or a school like in the above-described example. FIG. 9 further shows a variation 902 of the amount of traffic adaptively controlled and a variation 905 of the amount of traffic controlled by the combination of adaptive control and fixed-point changing.

The variation 902 in the amount of traffic under the adaptive control based on coordination among the eNBs 401 to 405 like in the first operative example of ICIC follows the actual variation 901 in the amount of traffic with a certain time lag. Accordingly, it cannot keep up with an abrupt change and causes an overshoot in control. On the other hand, in the fixed-point changing of RRM profiles, the time slot and the tendency of drastic change in the amount of traffic is preliminarily predicted from statistics information. The RRM profile is changed from the RRM profile 1 to the RRM profile 2 at 9:00 (903) to increase the available radio resources and is changed again to the RRM profile 1 at 17:00 (904) to support the terminals in the cell-edge area. The combination of the fixed-point changing and adaptive control achieves ICIC that quickly follows changes in traffic distribution in the system and is efficient as shown in the thin line 905.

The maintenance apparatus 407 may survey the traffic periodically after setting the RRM profiles and the time of change and coordinate the contents of the profiles and the time to change the profiles; thereby, more accurate fixed-point changing becomes available. When a new base station is added, the maintenance apparatus 407 may set an existing RRM profile for the initial settings, operate base stations with adaptive control to cover changes, survey statistics information during the operation, and coordinate the contents and the change time of RRM profiles based on the analysis of the surveillance

This invention is, as to a multidimensional structured array and setting of parameters, applicable to a wireless communication system that allocates radio resources to terminals. In particular, this invention is preferably applicable to a radio resource management in a wireless communication system including radio base stations having wireless network control functions.

## Claims

1. A base station for providing a wireless communication area, which is coupled to a core network via a gateway, comprising:
an interface for receiving settings of availability of allocation to terminals located in a border area of the wireless communication area and availability of allocation to terminals located in an area other than the border area of the wireless communication area for each of radio resource blocks which are defined by dividing radio resources available for use in the wireless communication area provided by the base station into predetermined units; and
a plurality of profiles for defining scheduling limitations on the radio resources in the number of the profiles of patterns, being set via the interface,
wherein, upon designation of one of the plurality of profiles with an identifier, the base station applies scheduling limitations defined by the profile designated with the identifier and allocates the radio resources.

2. The base station according to claim 1, wherein the radio resource blocks are defined by dividing the radio resources available for use in the wireless communication area provided by the base station with respect to axes of frequency, time, and space.

3. The base station according to claim 1, wherein:
the scheduling limitations on the radio resources set in the number of the profiles of patterns are defined in accordance with an array of a structure in three dimensions of axes of frequency, time and space; and
a member function of the structure includes at least a variable indicating the availability of allocation to terminals located in the border area of the wireless communication area and a variable indicating the availability of allocation to terminals located in the area other than the border area of the wireless communication area.

4. The base station according to claim 1, wherein time to change the profile and the scheduling limitations indicated by the profile is determined based on an amount of traffic at the base station and mobility of the terminals in the wireless communication area provided by the base station.

5. The base station according to claim 1, wherein the base station allocates the radio resources based on the scheduling limitations indicated by the profile designated with the identifier and specific scheduling limitations on the radio resources determined in relation to a different base station.

6. The base station according to claim 1, wherein the set plurality of profiles are changed in accordance with a clock installed in the base station.

7. The base station according to claim 1, wherein:
the interface further receives a manner of separation and a threshold in the manner of separation, or a threshold in a manner of separation, between the terminals located in the border area of the wireless communication area and the terminals located in the area other than the border area of the wireless communication area; and
the base station allocates the radio resources based on the manner of separation and the threshold in the manner of separation, or the threshold in the manner of separation.

8. The base station according to claim 1, wherein:
whether the terminal is located in the border area of the wireless communication area or in the area other than the border area of the wireless communication area is determined based on:
(1) a distance from the base station;
(2) an intensity of a pilot signal of the base station received by the terminal; or
(3) a ratio between a received pilot power of the pilot signal of the base station received by the terminal and an interference power.

9. The base station according to claim 1, wherein a predetermined ratio of terminals out of the terminals in the wireless communication area are determined to be the terminals located in the area other than the border area of the wireless communication area.

10. The base station according to claim 1, wherein whether a terminal is included in the terminals located in the border area of the wireless communication area or the terminals located in the area other than the border area of the wireless communication area is determined based on conditions predetermined in each eNB.

11. The base station according to claim 1, wherein the plurality of profiles include information indicating that the threshold is not determined.

12. An apparatus connected with a base station for providing a wireless communication area which is coupled to a core network via a gateway,
the base station including an interface for receiving settings of availability of allocation to terminals located in a border area of the wireless communication area and availability of allocation to terminals located in an area other than the border area of the wireless communication area for each of radio resource blocks which are defined by dividing radio resources available for use in the wireless communication area provided by the base station into predetermined units,
the apparatus comprising:
a plurality of profiles for defining scheduling limitations on the radio resources in the number of the profiles of patterns, wherein:
the apparatus installs the plurality of profiles in the base station; and
the apparatus designates one of the plurality of profiles with an identifier so that the base station applies scheduling limitations defined by the profile designated with the identifier and allocates the radio resources.

13. The apparatus according to claim 12, wherein the radio resource blocks are defined by dividing the radio resources available for use in the wireless communication area provided by the base station along axes of frequency, time, and space.

14. The apparatus according to claim 12, wherein:
the scheduling limitations on the radio resources set in the number of the profiles of patterns are defined in accordance with an array of a structure in three dimensions of axes of frequency, time and space; and
a member function of the structure includes at least a variable indicating the availability of allocation to terminals located in the border area of the wireless communication area and a variable indicating the availability of allocation to terminals located in the area other than the border area of the wireless communication area.

15. The apparatus according to claim 12, wherein time to change the profile and the scheduling limitations indicated by the profile is determined based on an amount of traffic at the base station and mobility of the terminals in the wireless communication area provided by the base station.

16. The apparatus according to claim 12, wherein the apparatus causes the base station to allocate the radio resources based on the scheduling limitations indicated by the profile designated with the identifier and specific scheduling limitations on the radio resources determined in relation to a different base station.

17. The apparatus according to claim 12, wherein the apparatus sets the base station so that the set plurality of profiles are changed in accordance with a clock installed in the base station.

18. The apparatus according to claim 12, wherein:
the apparatus sends via the interface a manner of separation and a threshold in the manner of separation, or a threshold in a manner of separation, between the terminals located in the border area of the wireless communication area and the terminals located in the area other than the border area of the wireless communication area; and
the base station allocates the radio resources based on the manner of separation and the threshold in the manner of separation, or the threshold in the manner of separation.

19. The apparatus according to claim 12, wherein whether the terminal is located in the border area of the wireless communication area or in the area other than the border area of the wireless communication area is determined based on:
(1) a distance from the base station;
(2) an intensity of a pilot signal of the base station received by the terminal; or
(3) a ratio between a received pilot power of the pilot signal of the base station received by the terminal and an interference power.

20. The apparatus according to claim 12, wherein a predetermined ration of terminals out of the terminals in the wireless communication area are determined to be the terminals located in the area other than the border area of the wireless communication area.

21. The apparatus according to claim 12, wherein whether a terminal is included in the terminals located in the border area of the wireless communication area or the terminals located in the area other than the border area of the wireless communication area is determined based on conditions predetermined in each eNB.

22. The apparatus according to claim 12, wherein the plurality of profiles include information indicating that the threshold is not determined.

23. A method of allocating radio resources in a wireless communication system including a base station for providing a wireless communication area which is coupled to a core network via a gateway, and an apparatus connected with the base station, the base station including an interface for receiving settings of availability of allocation to terminals located in a border area of the wireless communication area and availability of allocation to terminals located in an area other than the border area of the wireless communication area for each of radio resource blocks which are defined by dividing radio resources available for use in the wireless communication area provided by the base station into predetermined units, the method including the steps of:
installing a plurality of profiles for defining scheduling limitations on the radio resources in the number of the profiles of patterns in the base station via the interface;
designating one of the plurality of profiles to be applied with an identifier; and
applying scheduling limitations defined by the profile designated with the identifier to allocate the radio resources.

24. The method of allocating radio resources according to claim 23, further including the step of:
dividing the radio resources available for use in the wireless communication area provided by the base station along axes of frequency, time, and space to define the radio resource blocks.

25. The method of allocating radio resources according to claim 23, wherein:
the scheduling limitations on the radio resources set in the number of the profiles of patterns are defined in accordance with an array of a structure in three dimensions of axes of frequency, time and space; and
a member function of the structure includes at least a variable indicating the availability of allocation to terminals located in the border area of the wireless communication area and a variable indicating the availability of allocation to terminals located in the area other than the border area of the wireless communication area.

26. The method of allocating radio resources according to claim 23, wherein time to change the profile and the scheduling limitations indicated by the profile is determined based on an amount of traffic at the base station and mobility of the terminals in the wireless communication area provided by the base station.

27. The method of allocating radio resources according to claim 23, further including the step of:
allocating the radio resources based on the scheduling limitations indicated by the profile designated with the identifier and specific scheduling limitations on the radio resources determined in relation to a different base station.

28. The method of allocating radio resources according to claim 23, further including the step of:
changing the set plurality of profiles in accordance with a clock installed in the base station.

29. The method of allocating radio resources according to claim 23, further including the step of:
setting, via the interface, a manner of separation and a threshold in the manner of separation, or a threshold in a manner of separation, between the terminals located in the border area of the wireless communication area and the terminals located in the area other than the border area of the wireless communication area to the base station.

30. The method of allocating radio resources according to claim 23, further including the step of:
determining whether the terminal is located in the border area of the wireless communication area or in the area other than the border area of the wireless communication area based on:
(1) a distance from the base station;
(2) an intensity of a pilot signal of the base station received by the terminal; or
(3) a ratio between a received pilot power of the pilot signal of the base station received by the terminal and an interference power.

31. The method of allocating radio resources according to claim 23, further including the step of:
determining that a predetermined ratio of terminals out of the terminals in the wireless communication area are the terminals located in the area other than the border area of the wireless communication area.

32. The method of allocating radio resources according to claim 23, further comprising the step of:
determining whether a terminal is included in the terminals located in the border area of the wireless communication area or the terminals located in the area other than the border area of the wireless communication area based on conditions predetermined in each eNB.

33. The method of allocating radio resources according to claim 23, wherein the plurality of profiles include information indicating that the threshold is not determined.
